# EUROPEAN PATENT APPLICATION

(11) **EP 2 453 339 A1**
(43) Date of publication of application: **16.05.2012**
(21) Application number: 09847004.0
(22) Date of filing: 02.12.2009
(51) Int. Cl.: G06F 3/041

(54) **TOUCH-CONTROL FLAT PANEL DISPLAY**

(30) Priority: 08.07.2009 CN 200910139906
(71) Applicant: Inferpoint Systems Limited, Road Town, Tortola (VG)
(72) Inventor: CHEN, Qiliang, Guangdong 518052 (CN); LIU, Haiping, Guangdong 518052 (CN)
(74) Representative: Beetz & Partner
(86) International application number: PCT/CN2009/075272
(87) International publication number: WO 2011/003253

(57) **Abstract**

A touch-control flat panel display (300), comprises a display screen (310) and a drive circuit (320), etc. Output terminals of a display drive circuit in the drive circuit (320) are connected to respective electrode lines of the display screen (310) respectively via respective elements of a display/touch-control signal gated output circuit (326) or a display/touch-control signal loaded circuit. The respective elements of the display/touch-control signal gating output circuit (326) or the display/touch-control signal loaded circuit are connected to a touch-control excitation source (323) through one or more circuit paths. The display/touch-control signal gated output circuit (326) or the display/touch-control signal loaded circuit enables more than two electrode lines of the display screen (310) to connect simultaneously to the touch-control excitation source (323) which supplies touch-control excitation energy. A touch-control circuit (325) detects in time-sharing changes of the touch-control signals on the circuit paths that connect the touch-control excitation source (323) with the respective electrode lines of the display screen (310), to judge whether positions of the respective electrode lines of the display screen (310) are touched. The circuit structural relation between the touch-control circuit (325) and the display drive circuit and the display screen (310) enables touch-control excitation signals to be applied simultaneously to different electrode lines of the display screen (310), flow directions of the touch-control signals in the display screen (310) are controlled, and touch-control positioning is effective and accurate.

## Description

### BACKGROUND OF THE INVENTION

### Field of Invention

The present invention relates to a touch screen and a flat panel display, and more particularly to a touch flat panel display.

### Related Art

The specification of Invention Patent Application No. 200610094814.1, entitled "TOUCH FLAT PANEL DISPLAY", has disclosed a connection mode between a touch system circuit and electrodes of a display screen, in which an analog switch is used to enable the electrodes of the display screen to transmit a display driving signal, or transmit and sense a touch signal; display driving and touch detection time division multiplex the electrodes of the display screen; and the electrodes of the display screen are used for display driving and touch detection. The specification of Invention Patent Application No. 200610106558.3, entitled "FLAT PANEL DISPLAY WITH TOUCH FUNCTION", has disclosed another connection mode between a touch system circuit and electrodes of a display screen, in which a signal loading and merge circuit is used to simultaneously transmit a display driving signal and to transmit and sense a touch signal; display driving and touch detection share the electrodes of the display screen simultaneously; and the electrodes of the display screen are used for display driving and touch detection. In the disclosure, the display screen and the touch screen are integrated.

The specification of Invention Patent Application No. 200810133417.X, entitled "TOUCH FLAT PANEL DISPLAY" has disclosed a mode for applying a touch excitation signal to electrode lines of a display screen. By connecting different electrode lines of the display screen to a touch excitation source simultaneously, a mode of simultaneously applying a touch excitation signal to different electrode lines of a display screen is implemented, thus controlling the flow direction of the touch excitation signal in the display screen, reducing crosstalk of the touch signal between different electrode lines of the display screen, and implementing touch positioning accurately.

Based on the above, it is a worthwhile task to seek a reasonable connection between a touch system circuit and a display driving circuit, so as to make the connection between the touch system circuit, the display driving circuit, and the electrodes of the display screen simple and practical, reduce the number of circuit units in the touch system circuit, and even integrate the display driving circuit with the touch system circuit.

### SUMMARY OF THE INVENTION

The present invention is directed to a structural relation of circuits between a touch system circuit, a display driving circuit, and a display screen, so as to implement simple and reasonable connection between touch excitation, display driving, and electrode lines of the display screen, thereby enabling different electrode lines of the display screen to simultaneously communicate with a touch excitation source, so as to simultaneously apply touch excitation to different electrode lines of the display screen, control the flow direction of a touch signal in the display screen, reduce crosstalk of the touch signal between different electrode lines of the display screen, and effectively detect and accurately position a touch.

The following technical solution is provided to solve the technical problems of the present invention.

A touch flat panel display includes a display screen and a driving circuit, in which the driving circuit further includes a display driving circuit and a touch system circuit. The display driving circuit is provided with a display driving source for providing display driving energy and a display gating and output circuit; output ends of the display gating and output circuit in the display driving circuit are respectively connected with input ends of units of a display/touch signal gating-switch and output circuit or a display/touch signal loading and merge circuit, and output ends of the display/touch signal gating-switch and output circuit or the display/touch signal loading and merge circuit are respectively connected with electrode lines of the display screen. The units of the display/touch signal gating-switch and output circuit or the display/touch signal loading and merge circuit are connected with a touch excitation source through one or more circuit paths; the display/touch signal gating-switch and output circuit or the display/touch signal loading and merge circuit enables more than two electrode lines of a display screen to simultaneously communicate with the touch excitation source for providing touch excitation energy; and the touch system circuit time division detects changes of touch signals on the circuit paths connecting the touch excitation source with the electrode lines of the display screen, so as to judge whether positions of the electrode lines of the display screen are touched.

The following technical solutions are further provided to solve the technical problems of the present invention.

In a specific implementation of the present invention, the units of the display/touch signal gating-switch and output circuit or the display/touch signal loading and merge circuit enabling the electrode lines of the display screen to communicate with the touch excitation source, are connected with the touch excitation source through one circuit path, and the touch system circuit detects changes of the touch signals on the path connecting the units of the display/touch signal gating-switch and output circuit or the display/touch signal loading and merge circuit with the touch excitation source, so as to judge whether positions of the electrode lines of the display screen gating the touch excitation source are touched.

In a specific implementation of the present invention, the units of the display/touch signal gating-switch and output circuit or the display/touch signal loading and merge circuit enabling the electrode lines of the display screen to communicate with the touch excitation source, are connected with the touch excitation source through no less than two circuit paths, and the touch system circuit detects changes of the touch signals on at least one path of the multiple paths connecting the units of the display/touch signal gating-switch and output circuit or the display/touch signal loading and merge circuit with the touch excitation source, so as to judge whether positions of the electrode lines of the display screen gating the touch excitation source are touched.

In a specific implementation of the present invention, the no less than two paths connecting the units of the display/touch signal gating-switch and output circuit or the display/touch signal loading and merge circuit with the touch excitation source implement gating through a multiplexer.

In a specific implementation of the present invention, a detection point of the touch system circuit for detecting the touch signal is disposed on the path connecting the touch excitation source with the units of the display/touch signal gating-switch and output circuit or the display/touch signal loading and merge circuit, or disposed on the path connecting the units of the display/touch signal gating-switch and output circuit or the display/touch signal loading and merge circuit with the electrode lines of the display screen.

In a specific implementation of the present invention, the detection point for detecting a touch signal is a potential point or an element for detecting changes of the touch signal.

In a specific implementation of the present invention, the multiplexer is an analog switch or other circuits having a gating function.

In a specific implementation of the present invention, a touch signal detection unit of the touch system circuit is a passive device, an active device, or a circuit unit formed by multiple elements.

In a specific implementation of the present invention, the touch system circuit detects the touch signal on at least one path of the multiple paths connecting the touch excitation source by detecting at least one of a current signal and a voltage signal.

In a specific implementation of the present invention, the touch system circuit detects the touch signal on at least one path of the multiple paths connecting the touch excitation source by detecting at least one of amplitude, time, phase, frequency signal, and pulse number.

In a specific implementation of the present invention, the touch excitation source connected with the electrode lines of the display screen is the same output end of the same touch excitation source, different output ends of the same touch excitation source, or a different touch excitation source.

In a specific implementation of the present invention, the touch excitation source is alternating current (AC) power supply or hybrid alternating current/direct current (AC/DC) power supply, and an output waveform is a square ware, a sine wave, a superposed wave of a square wave or a sine wave with DC, or other waveforms.

In a specific implementation of the present invention, a frequency of the touch signal output by the driving circuit to the electrode lines of the display screen through the display/touch signal gating-switch and output circuit or the display/touch signal loading and merge circuit is no less than 50 kHz.

Compared with the prior art, the present invention has the following beneficial effects.

The disclosure is a quite specific structural relation of circuits between a touch system circuit, a display driving circuit, and a display screen, which makes a reasonable connection between the touch system circuit, the display driving circuit, and electrodes of the display screen. The method not only can enable different electrode lines of the display screen to simultaneously communicate with a touch excitation source, so as to simultaneously apply a touch excitation signal to different electrode lines of the display screen, control the flow direction of the touch signal in the display screen, reduce crosstalk of the touch signal between different electrode lines of the display screen, but also can use only a small amount of touch system circuit units to respectively detect the touch signal flowing through different electrode lines of the display screen, so as to reduce the volume, power consumption, and cost of the touch system circuit unit. The connection between the touch system circuit, the display driving circuit, and the electrodes of the display screen is simplified, and even the display driving circuit and the touch system circuit may be integrated. By setting a reasonable condition for judging the touched electrode lines, the touch flat panel display of the present invention can support multi-point touch.

### BRIEF DESCRIPTION OF THE DRAWINGS

FIG. 1 is a schematic view illustrating electrical connection of a first embodiment in the present invention;
FIG. 2 is a schematic view illustrating electrical connection of a second embodiment in the present invention;
FIG. 3 is a schematic view illustrating electrical connection of a third embodiment in the present invention;
FIG. 4 is a schematic view illustrating electrical connection of a fourth embodiment in the present invention;
FIG. 5 is a schematic view illustrating electrical connection of a fifth embodiment in the present invention;
FIG. 6 is a schematic view illustrating electrical connection of a sixth embodiment in the present invention;
FIG. 7 is a schematic view illustrating electrical connection of a seventh embodiment in the present invention;
FIG. 8 is a schematic view illustrating electrical connection of an eighth embodiment in the present invention;
FIG. 9 is a schematic view illustrating electrical connection of a ninth embodiment in the present invention;
FIG. 10 is a schematic view illustrating electrical connection of a ninth embodiment in the present invention;
FIG. 11 is a schematic view illustrating electrical connection of a ninth embodiment in the present invention; and
FIG. 12 is a schematic view illustrating electrical connection of a ninth embodiment in the present invention.

### DETAILED DESCRIPTION OF THE INVENTION

Currently, many types of flat panel displays are available in market. Take a liquid crystal display (LCD) for example, for a passive LCD such as a Twist Nematic (TN) LCD (TN-LCD) and a Super Twist Nematic (STN) LCD (STN-LCD), normally display scanning electrode lines or display signal electrode lines (that is, the row electrode lines) are provided on a lower substrate glass, display signal electrode lines or display scanning electrode lines (that is, the column electrode lines) are provided on an upper substrate glass, and intersections thereof are display pixels. An active LCD such as a Thin Film Transistor (TFT) LCD (TFT-LCD) normally includes a TFT array and a display pixel array located on substrate glass, display scanning electrode lines (that is, the row electrode lines) connected with gates of the TFTs, display signal electrode lines (that is, the column electrode lines) connected with sources or drains of the TFTs, and a color filter and common electrodes located on another substrate glass. Other flat panel displays such as a plasma display (PDP), an active and passive organic light emitting diode (OLED) display are also provided with display scanning electrode lines and display signal electrode lines (that is, the row and column electrode lines).

The touch flat panel display disclosed in the present invention includes a display screen and a driving circuit, in which the driving circuit further includes a display driving circuit and a touch system circuit. Output ends of the driving circuit are respectively connected with electrode lines of the display screen. The touch system circuit connected with the display driving circuit implements touch detection of column and row electrode lines of the flat panel display; display driving and touch detection multiplex the display screen electrodes, thus enabling the flat panel display to display normally and to implement touch detection at the same time.

### First Embodiment

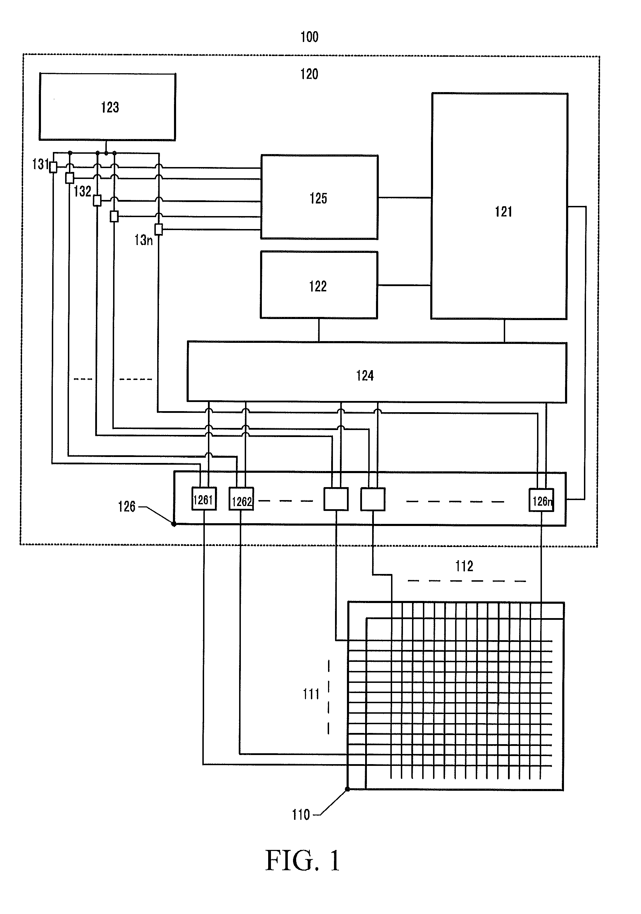

As shown in FIG. 1, a touch flat panel display 100 includes a display screen 110 and a driving circuit 120. The driving circuit 120 includes a control circuit 121, a display driving source 122 for providing display driving energy, a touch excitation source 123 for providing touch excitation energy, a display gating and output circuit 124, a touch system circuit 125, and a display/touch signal gating-switch and output circuit 126. The display screen 110 is provided with row electrodes 11 and column electrodes 112 of the display screen. An input end of the display gating and output circuit 124 is connected with the display driving source 122; output ends of the display gating and output circuit 124 are respectively connected with one input end of multiplexer units 1261, 1262, ..., 126n of the display/touch signal gating-switch and output circuit 126; the other input end of the multiplexer units 1261, 1262, ..., 126N is respectively connected with the control excitation source 123 through touch signal sampling units 131, 132, ..., 13n of the touch system circuit 125; the touch signal sampling units 131, 132, ..., 13n are connected with the touch system circuit 125, and the touch system circuit 125 detects changes of touch signals on the sampling units; output ends of the multiplexer units 1261, 1262, ..., 126n of the display/touch signal gating-switch and output circuit 126 are respectively connected with electrode lines of the row electrodes 111 and column electrodes 112 of the display screen.

The control circuit 121 controls the display/touch signal gating-switch and output circuit 126 to enable the electrode lines of the display screen to communicate with the output ends of the display gating and output circuit 124, and the display gating and output circuit 124 sends display driving signals to the connected electrode lines of the row electrodes 111 and column electrodes 112 of the display screen; alternatively, the control circuit 121 controls the display/touch signal gating-switch and output circuit 126 to enable the electrode lines of the display screen to communicate with the touch excitation source 123, and the touch excitation source 123 applies touch excitation signals to the connected electrode lines of the row electrodes 111 and column electrodes 112 of the display screen. Connection lines in FIG. 1 not only represent single line connection, but also represent multiple line connection.

The touch flat panel display works in the following mode.

During the display driving period, the display/touch signal gating-switch and output circuit 126 in the driving circuit 120 enables the electrode lines of the display screen to communicate with the output ends of the display gating and output circuit 124, the control circuit 121 controls the display gating and output circuit 124 to send the display driving signals to the connected row electrodes 111 and column electrodes 112 of the display screen, and the display screen 110 is in a display driving state.

During the touch detection period, the control circuit 121 controls the display/touch signal gating-switch and output circuit 126 to enable the electrode lines of the display screen to respectively communicate with the touch excitation source 123 though the touch signal sampling units 131, 132, ..., 13n, and the touch excitation source 123 simultaneously applies touch excitation signals to the electrode lines of the row electrodes 111 and column electrodes 112 of the display screen. The touch system circuit 125 judges whether the display screen 110 is touched and positions of which row and column electrode lines are touched by detecting changes of touch signals on the touch signal sampling units 131, 132, ..., 13n, and the display screen 110 is in a touch detection state. The position of the touched point is determined according to the detected intersection point of the touched row electrode line and touched column electrode line.

The touch flat panel display 100 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The display/touch signal gating-switch and output circuit enables the electrodes of the display screen either to communicate with the display driving circuit to transmit display driving signals, or to communicate with the touch system circuit to transmit touch signals, which is a multichannel analog switch, or other circuits having a gating function.

The touch signal sampling unit is a single passive device such as a resistor, capacitor, or inductor, a combination of multiple passive devices, a single active device, or a circuit unit having active devices.

### Second Embodiment

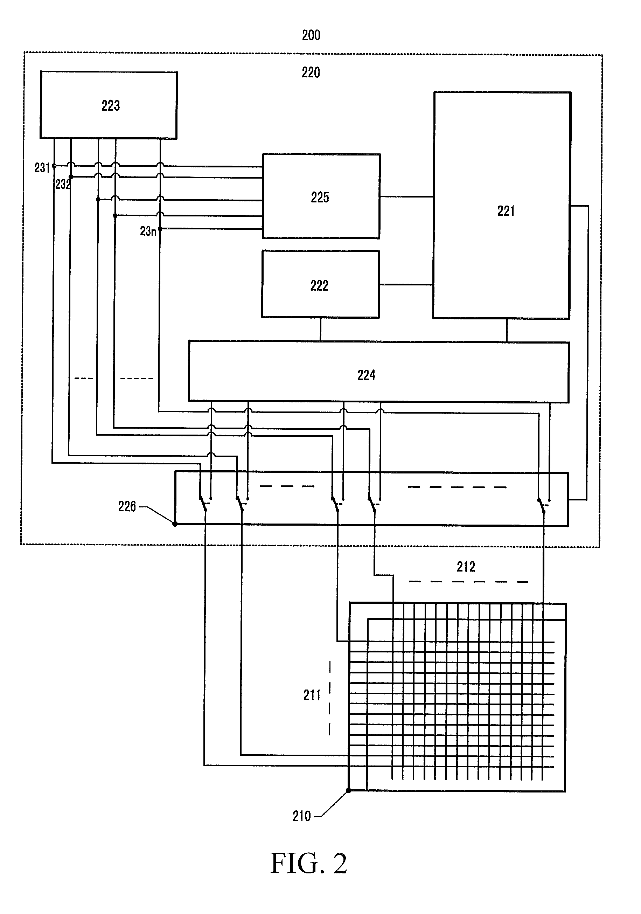

As shown in FIG. 2, a touch flat panel display 200 includes a display screen 210 and a driving circuit 220. The driving circuit 220 includes a control circuit 221, a display driving source 222 for providing display driving energy, a touch excitation source 223 for providing touch excitation energy, a display gating and output circuit 224, a touch system circuit 225, and a display/touch signal gating-switch and output circuit formed by an analog switch group 226. The display screen 210 is provided with row electrodes 211 and column electrodes 212 of the display screen. An input end of the display gating and output circuit 224 is connected with the display driving source 222; output ends of the display gating and output circuit 224 are respectively connected with one input end of the analog switches of the analog switch group 226; the other input end of the analog switches of the analog switch group 226 is respectively connected with the touch excitation source 223; and output ends of the analog switches of the analog switch group 226 are respectively connected with the electrode lines of the row electrodes 211 and column electrodes 212 of the display screen. Touch signal detection points 231, 232, ..., 23n of the touch system circuit 225 respectively corresponding to electrode lines of the display screen are disposed on connection points between the analog switch group 226 and the touch excitation source 223, which are connected with the touch system circuit 225, and the touch system circuit 225 detects changes of electrical potentials on the touch signal detection points; a reference endpoint for measuring the potential is disposed on a common ground end of the driving circuit 220, or a specific reference point of the driving circuit 220. The control circuit 221 controls the analog switch group 226 to enable the electrode lines of the display screen to communicate with the output ends of the display gating and output circuit 224, and the display gating and output circuit 224 sends display driving signals to the connected electrode lines of the row electrodes 211 and column electrodes 212 of the display screen; alternatively, the control circuit 221 controls the analog switch group 226 to enable the electrode lines of the display screen to communicate with the touch excitation source 223, and the touch excitation source 223 applies touch excitation signals to the connected electrode lines of the row electrodes 211 and column electrodes 212 of the display screen. Connection lines in FIG. 2 not only represent single line connection, but also represent multiple line connection.

The touch flat panel display works in the following mode.

During the display driving period, the analog switch group 226 in the driving circuit 220 enables the electrode lines of the display screen to communicate with the output ends of the display gating and output circuit 224, the control circuit 221 controls the display gating and output circuit 224 to send display driving signals to the connected row electrodes 211 and column electrodes 212 of the display screen, and the display screen 210 is in a display driving state.

During the touch detection period, the control circuit 221 controls the analog switch group 226 to enable the electrode lines of the display screen to communicate with the touch excitation source 223, and the touch excitation source 223 simultaneously applies touch excitation signals to electrode lines of the row electrodes 211 and column electrodes 212 of the display screen. The touch system circuit 225 judges whether the display screen 210 is touched and positions of which row and column electrode lines are touched by detecting changes of touch signals on the touch signal detection points 231, 232, ..., 23n, and the display screen 210 is in a touch detection state. The position of the touched point is determined according to the detected intersection point of the touched row electrode line and touched column electrode line.

The touch flat panel display 200 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Third Embodiment

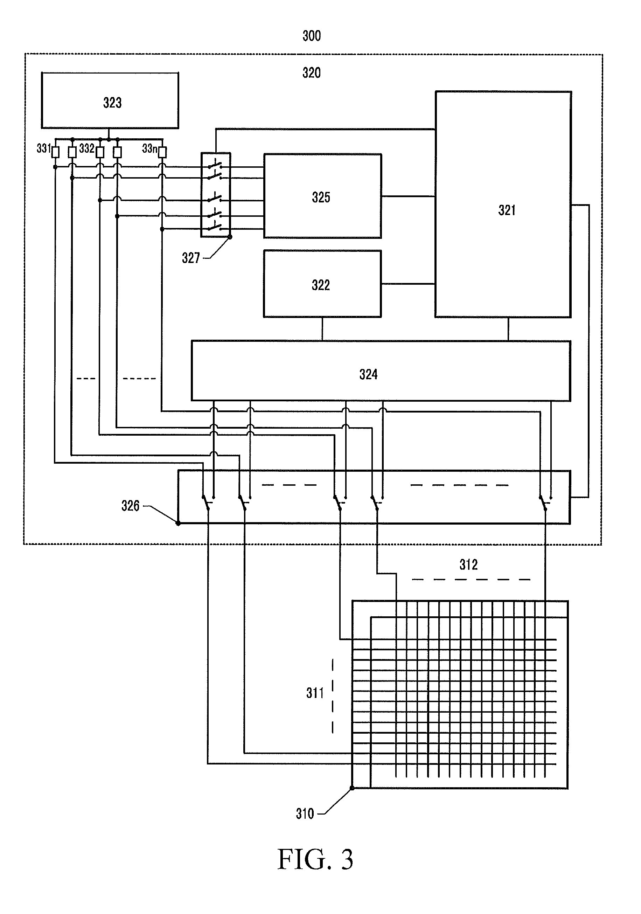

As shown in FIG. 3, a touch flat panel display 300 includes a display screen 310 and a driving circuit 320. The driving circuit 320 includes a control circuit 321, a display driving source 322 for providing display driving energy, a touch excitation source 323 for providing touch excitation energy, a display gating and output circuit 324, a touch system circuit 325, a display/touch signal gating-switch and output circuit formed by an analog switch group 326, and an analog switch group 327. The display screen 310 is provided with row electrodes 311 and column electrodes 312 of the display screen. An input end of the display gating and output circuit 324 is connected with the display driving source 322; output ends of the display gating and output circuit 324 are respectively connected with one input end of the analog switches of the analog switch group 326; the other input end of the analog switches of the analog switch group 326 is respectively connected with the touch excitation source 323 through touch signal sampling units 331, 332, ..., 33n of the touch system circuit 325; and the output ends of the analog switches of the analog switch group 326 are respectively connected with the electrode lines of the row electrodes 311 and column electrodes 312 of the display screen. Touch signal detection points respectively corresponding to the electrode lines of the display screen are disposed on connection points between the analog switch group 326 and the touch signal sampling units 331, 332, ..., 33n, which are connected with the touch system circuit 325 through the analog switches of the analog switch group 327, and the touch system circuit 325 detects changes of electrical potentials on the touch signal detection points; a reference endpoint for measuring the potential is disposed on the output end of the touch excitation source 323, a common ground end of the driving circuit 320, or a specific reference point of the driving circuit 320. The control circuit 321 controls the analog switch group 326 to enable the electrode lines of the display screen to communicate with the output ends of the display gating and output circuit 324, and the display gating and output circuit 324 sends display driving signals to the connected electrode lines of the row electrodes 311 and column electrodes 312 of the display screen; alternatively, the control circuit 321 controls the analog switch group 326 to enable the electrode lines of the display screen to communicate with the touch excitation source 323, and the touch excitation source 323 applies touch excitation signals to the connected electrode lines of the row electrodes 311 and column electrodes 312 of the display screen. Connection lines in FIG. 3 not only represent single line connection, but also represent multiple line connection.

The touch flat panel display works in the following mode.

During the display driving period, the analog switch group 326 in the driving circuit 320 enables the electrode lines of the display screen to communicate with the output ends of the display gating and output circuit 324, the control circuit 321 controls the display gating and output circuit 324 to send display driving signals to the connected row electrodes 311 and column electrodes 312 of the display screen, and the display screen 310 is in a display driving state.

During the touch detection period, the control circuit 321 controls the analog switch group 326 to enable the electrode lines of the display screen to communicate with the touch excitation source 323, and the touch excitation source 323 simultaneously applies touch excitation signals to electrode lines of the row electrodes 311 and column electrodes 312 of the display screen. The control circuit 321 controls the analog switch group 327 to enable touch signal detection points between the analog switch group 326 and the touch signal sampling units 331, 332, ... 33n to communicate one after another with the touch system circuit 325, and the touch system circuit 325 judges whether the display screen 310 is touched and positions of which row and column electrode lines are touched by detecting one after another changes of touch signals on the touch signal detection points, and the display screen 310 is in a touch detection state. The position of the touched point is determined according to the detected intersection point of the touched row electrode line and touched column electrode line.

The touch flat panel display 300 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The touch signal sampling unit is a single passive device such as a resistor, capacitor, or inductor, a combination of multiple passive devices, a single active device, or a circuit unit having active devices.

### Fourth Embodiment

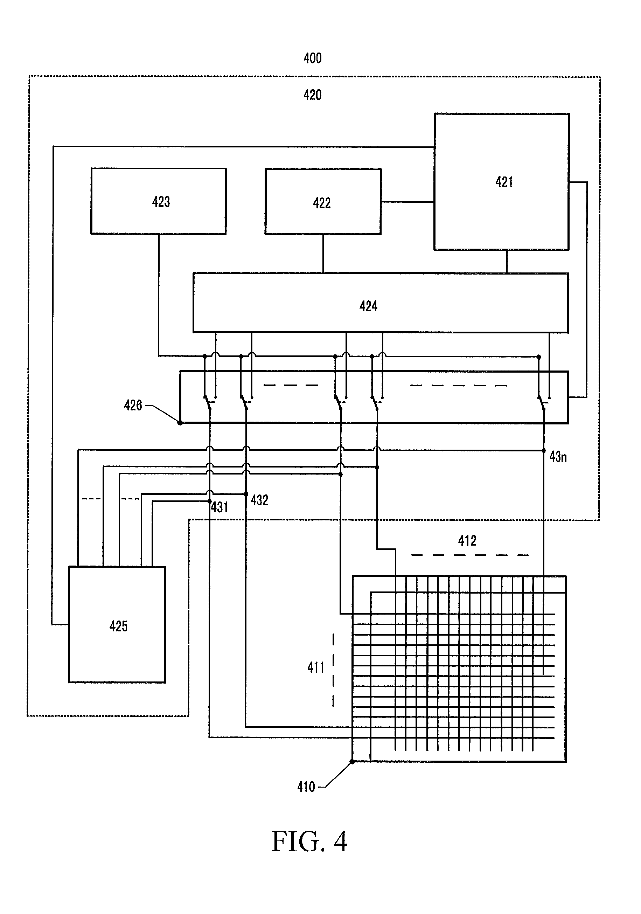

As shown in FIG. 4, a touch flat panel display 400 includes a display screen 410 and a driving circuit 420. The driving circuit 420 includes a control circuit 421, a display driving source 422 for providing display driving energy, a touch excitation source 423 for providing touch excitation energy, a display gating and output circuit 424, a touch system circuit 425, and a display/touch signal gating-switch and output circuit formed by an analog switch group 226. The display screen 410 is provided with row electrodes 411 and column electrodes 412 of the display screen. An input end of the display gating and output circuit 424 is connected with the display driving source 422; output ends of the display gating and output circuit 424 are respectively connected with one input end of the analog switches of the analog switch group 426; the other input ends of the analog switches are together connected with the touch excitation source 423; and output ends of the analog switches of the analog switch group 226 are respectively connected with the electrode lines of the row electrodes 411 and column electrodes 412 of the display screen. Detection points 431, 432, ..., 43n of the touch system circuit 425 respectively corresponding to electrode lines of the display screen are disposed on connection points between the analog switch group 426 and electrode lines of the display screen 410, which are connected with the touch system circuit 425, and the touch system circuit 425 detects changes of electrical potentials on the detection points; a reference endpoint for measuring the potential is disposed on the output end of the touch excitation source 423, a common ground end of the driving circuit 420, or a specific reference point of the driving circuit 420. The control circuit 421 controls the analog switch group 426 to enable the electrode lines of the display screen to communicate with the output ends of the display gating and output circuit 424, and the display gating and output circuit 424 sends display driving signals to the connected electrode lines of the row electrodes 411 and column electrodes 412 of the display screen; alternatively, the control circuit 421 controls the analog switch group 426 to enable the electrode lines of the display screen to communicate with the touch excitation source 423, and the touch excitation source 423 applies touch excitation signals to the connected electrode lines of the row electrodes 411 and column electrodes 412 of the display screen. Connection lines in FIG. 4 not only represent single line connection, but also represent multiple line connection.

The touch flat panel display works in the following mode.

During the display driving period, the analog switch group 426 in the driving circuit 420 enables the electrode lines of the display screen to communicate with the output ends of the display gating and output circuit 424, the control circuit 421 controls the display gating and output circuit 424 to send display driving signals to the connected row electrodes 411 and column electrodes 412 of the display screen, and the display screen 410 is in a display driving state.

During the touch detection period, the control circuit 421 controls the analog switch group 426 to enable the electrode lines of the row and column of the display screen to communicate with the touch excitation source 423, and the touch excitation source 423 simultaneously applies touch excitation signals to electrode lines of the row electrodes 411 and column electrodes 412 of the display screen. The touch system circuit 425 judges whether the display screen 410 is touched and positions of which row and column electrode lines are touched by detecting changes of touch signals on the detection points 431, 432, ..., 43n, and the display screen 410 is in a touch detection state. The position of the touched point is determined by the detected intersection point of the touched row electrode line and touched column electrode line.

The touch flat panel display 400 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

### Fifth Embodiment

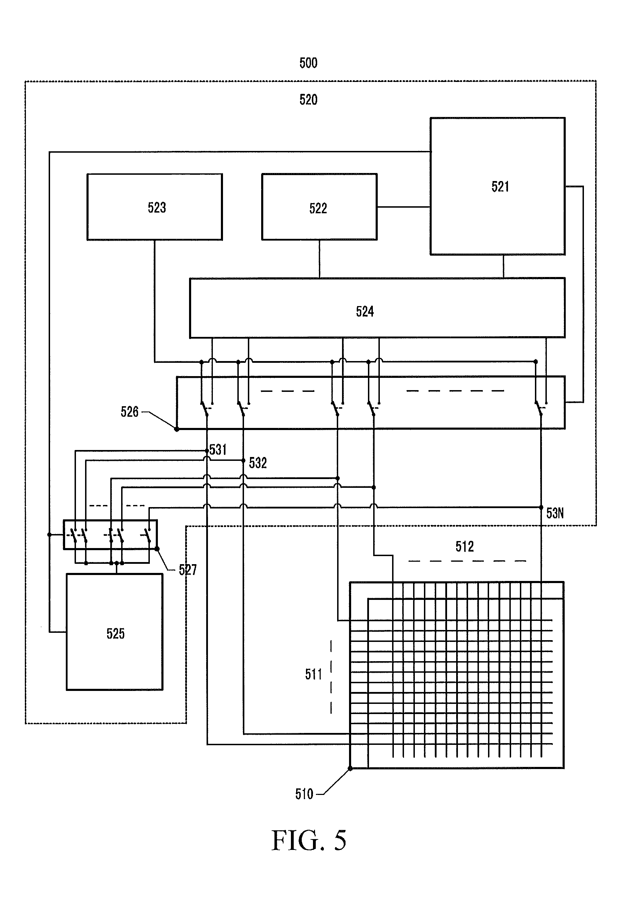

As shown in FIG. 5, a touch flat panel display 500 includes a display screen 510 and a driving circuit 520. The driving circuit 520 includes a control circuit 521, a display driving source 522 for providing display driving energy, a touch excitation source 523 for providing touch excitation energy, a display gating and output circuit 524, a touch system circuit 525, a display/touch signal gating-switch and output circuit formed by an analog switch group 526, and an analog switch group 527. The display screen 510 is provided with row electrodes 511 and column electrodes 512 of the display screen. An input end of the display gating and output circuit 524 is connected with the display driving source 522; output ends of the display gating and output circuit 524 are respectively connected with one input end of the analog switches of the analog switch group 526; the other input ends of the analog switches are together connected with the touch excitation source 523; and output ends of the analog switches of the analog switch group 526 are respectively connected with the electrode lines of the row electrodes 511 and column electrodes 512 of the display screen. Touch signal detection points 531, 532, ..., 53n respectively corresponding to electrode lines of the display screen are disposed on connection points between the analog switch group 526 and electrode lines of the display screen 510, which are further connected with the touch system circuit 525 through the analog switches of the analog switch group 527, and the touch system circuit 525 detects changes of electrical potentials on the detection points; a reference endpoint for measuring the potential is disposed on the output end of the touch excitation source 523, a common ground end of the driving circuit 520, or a specific reference point of the driving circuit 520. The control circuit 521 controls the analog switch group 526 to enable the electrode lines of the display screen to communicate with the output ends of the display gating and output circuit 524, and the display gating and output circuit 524 sends display driving signals to the connected electrode lines of the row electrodes 511 and column electrodes 512 of the display screen; alternatively, the control circuit 521 controls the analog switch group 526 to enable the electrode lines of the display screen to communicate with the touch excitation source 523, and the touch excitation source 523 applies touch excitation signals to the connected electrode lines of the row electrodes 511 and column electrodes 512 of the display screen. Connection lines in FIG. 5 not only represent single line connection, but also represent multiple line connection.

The touch flat panel display works in the following mode.

During the display driving period, the analog switch group 526 in the driving circuit 520 enables the electrode lines of the display screen to communicate with the output ends of the display gating and output circuit 524, the control circuit 521 controls the display gating and output circuit 524 to send display driving signals to the connected row electrodes 511 and column electrodes 512 of the display screen, and the display screen 510 is in a display driving state.

During the touch detection period, the control circuit 521 controls the analog switch group 526 to enable the electrode lines of the display screen to communicate with the touch excitation source 523, and the touch excitation source 523 simultaneously applies touch excitation signals to electrode lines of the row electrodes 511 and column electrodes 512 of the display screen. The control circuit 521 controls the analog switch group 527 to enable touch signal detection points between the output ends of the analog switches of the analog switch group 526 and the electrode lines of the display screen 510 to communicate one after another with the touch system circuit 525, and the touch system circuit 525 judges whether the display screen 510 is touched and positions of which row and column electrode lines are touched by detecting one after another changes of touch signals on the touch signal detection points, and the display screen 510 is in a touch detection state. The position of the touched point is determined according to the detected intersection point of the touched row electrode line and touched column electrode line.

The touch flat panel display 500 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

### Sixth Embodiment

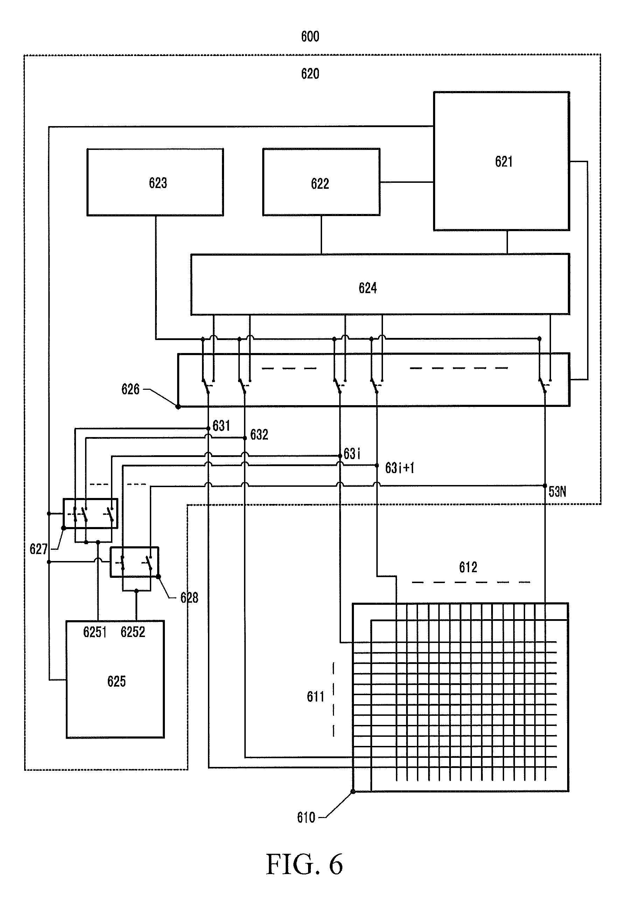

As shown in FIG. 6, a touch flat panel display 600 includes a display screen 610 and a driving circuit 620. The driving circuit 620 includes a control circuit 621, a display driving source 622 for providing display driving energy, a touch excitation source 623 for providing touch excitation energy, a display gating and output circuit 624, a touch system circuit 625, a display/touch signal gating-switch and output circuit formed by an analog switch group 626, and a multiplexer formed by an analog switch group 627 and an analog switch group 628. The display screen 610 is provided with row electrodes 611 and column electrodes 612 of the display screen. An input end of the display gating and output circuit 624 is connected with the display driving source 622; the output ends of the display gating and output circuit 624 are respectively connected with one input end of the analog switches of the analog switch group 626; the other input ends of the analog switches of the analog switch group 626 are respectively connected with the touch excitation source 623 together; and output ends of the analog switches of the analog switch group 626 are respectively connected with the electrode lines of the row electrodes 611 and column electrodes 612 of the display screen. Touch signal sampling and detection points 631, 632, ..., 63i, 63i+1, ..., 63n respectively corresponding to the electrode lines of the display screen are disposed on connection points between the analog switch group 626 and the electrode lines of the display screen 610; the touch signal detection points 631, ..., 63i are connected with a port 6251 of the touch system circuit 625 through the analog switches of the analog switch group 627, the touch signal detection points 63i+1, ..., 63n are connected with a port 6252 of the touch system circuit 625 through the analog switches of the analog switch group 628, and the touch system circuit 625 detects changes of electrical potentials on the detection points; a reference endpoint for measuring the potential is disposed on the output end of the touch excitation source 523, a common ground end of the driving circuit 620, or a specific reference point of the driving circuit 620. The control circuit 621 controls the analog switch group 626 to enable the electrode lines of the display screen either to communicate with the output ends of the display gating and output circuit 624, and the display gating and output circuit 624 sends display driving signals to the connected electrode lines of the row electrodes 611 and column electrodes 612 of the display screen; alternatively, the control circuit 621 controls the analog switch group 626 to enable the electrode lines of the display screen to communicate with the touch excitation source 623, and the touch excitation source 623 applies touch excitation signals to the connected electrode lines of the row electrodes 611 and column electrodes 612 of the display screen. Connection lines in FIG. 6 not only represent single line connection, but also represent multiple line connection.

The touch flat panel display works in the following mode.

During the display driving period, the analog switch group 626 in the driving circuit 620 enables the electrode lines of the display screen to communicate with the output ends of the display gating and output circuit 624, the control circuit 621 controls the display gating and output circuit 624 to send display driving signals to the connected row electrodes 611 and column electrodes 612 of the display screen, and the display screen 610 is in a display driving state.

During the touch detection period, the control circuit 621 controls the analog switch group 626 to enable the electrode lines of the display screen to communicate with the touch excitation source 623, and the touch excitation source 623 simultaneously applies touch excitation signals to electrode lines of the row electrodes 611 and column electrodes 612 of the display screen. The control circuit 621 controls the analog switch group 627 to enable the touch signal detection points 631, ..., 63i between the output ends of the analog switch group 626 and electrode lines of the display screen 610 to communicate one after another with the port 6251 of the touch system circuit 625, and the touch system circuit 625 detects changes of touch signals on each point of the touch signal detection points 631, ..., 63i; meanwhile, the control circuit 621 also controls the analog switch group 628 to enable the touch signal detection points 63i+1, ..., 63n between the output ends of the analog switch group 626 and the electrode lines of the display screen 610 to communicate with the port 6252 of the touch system circuit 625, and the touch system circuit 625 detects changes of touch signals on each point of the touch signal detection points 63i+1, ..., 63n; the touch system circuit 625 judges whether the display 610 is touched and positions of which row and column electrodes are touched by respectively detecting changes of touch signals on touch signal detection points from 631 to 63i and from 63i+1 to 63n in a manner of scanning group by group, and the display screen 610 is in a touch detection state. The position of the touched point is determined by the detected intersection point of the touched row electrode line and touched column electrode line.

The touch flat panel display 600 repeatedly switches between the display driving period and the touch detection period, and the display driving and the touch detection time division multiplex the electrodes of the display screen, thus forming a touch flat panel display which supports both display and touch control.

The touch signal points 631, 632, ..., 63i, 63i+1, ..., 63n are divided into two groups, and the touch signals are scanned and detected simultaneously, so as to save time compared with scanning and detecting the touch signals without grouping. If the touch signal detection points are divided into more groups to be scanned and detected respectively, the touch detection period will be shortened and the display driving period will be extended, thus helping to avoid the touch detection from affecting the effect of displaying.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

### Seventh Embodiment

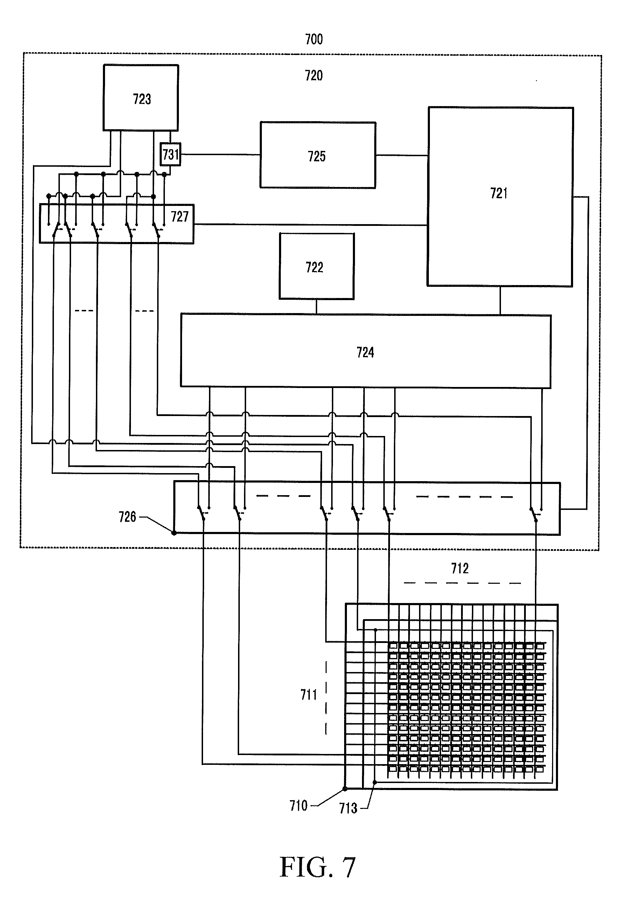

As shown in FIG. 7, a touch flat panel display 700 includes a Thin Film Transistor (TFT) active display screen 710 and a driving circuit 720. The driving circuit 720 includes a control circuit 721, a display driving source 722 for providing display driving energy, a touch excitation source 723 for providing touch excitation energy, a display gating and output circuit 724, a touch system circuit 725, and a display/touch signal gating-switch and output circuit formed by analog switch groups 726 and 727. The display screen 710 is provided with row electrode 711s, column electrodes 712, and common electrodes 713 of the display screen. An input end of the display gating and output circuit 724 is connected with the display driving source 722; output ends of the display gating and output circuit 724 are respectively connected with one input end of the analog switches of the analog switch group 726; the other input ends of the analog switches of the analog switch group 726 are respectively connected with the output ends of the analog switches of the analog switch group 727; output ends of the analog switches of the analog switch group 726 are respectively connected with the electrode lines of the row electrodes 711 and column electrodes 712 and the common electrodes 713 of the display screen; one input end of the analog switches of the analog switch group 727 is connected with the touch excitation source 723 through the touch sampling element 731 of the touch system circuit 725, and the other input ends are directly connected with the touch excitation source 723 together; the touch sampling element 731 is connected with the touch system circuit 725, and the touch system circuit 725 detects changes of touch signals on the sampling element. The control circuit 721 controls the analog switch group 726 to enable the electrode lines of the display screen to communicate with the output ends of the display gating and output circuit 724, and the display gating and output circuit 724 sends display driving signals to the connected electrode lines of the row electrodes 711 and column electrodes 712 and the common electrodes 713 of the display screen; alternatively, the control circuit 721 controls the analog switch group 726 to enable the electrode lines of the display screen to communicate with the touch excitation source 723, and the touch excitation source 723 applies touch excitation signals to the connected electrode lines of the row electrodes 711 and column electrodes 712 and the common electrodes of the display screen. Connection lines in FIG. 7 not only represent single line connection, but also represent multiple line connection.

The touch flat panel display works in the following mode.

During the display driving period, the analog switch group 726 in the driving circuit 720 enables the electrode lines of the display screen to communicate with the output ends of the display gating and output circuit 724, the control circuit 721 controls the display gating and output circuit 724 to send display driving signals to the connected row electrodes 711, column electrodes 712, and common electrodes 713 of the display screen, and the display screen 710 is in a display driving state.

During the touch detection period, the control circuit 721 controls the analog switch group 726 to enable the electrode lines of the display screen all to communicate with the analog switch group 727, and then, through the analog switch group 727, to enable only one electrode line of the display screen or multiple electrode lines of the display screen to communicate with the touch excitation source 723 through the touch sampling element 731; the other electrodes of the display screen directly communicate with the touch excitation source 723; the touch system circuit 725 judges whether the display screen 710 is touched and positions of which row and column electrode lines are touched by detecting changes of touch signals on the touch sampling element 731 one after another, and the display screen 710 is in a touch detection state. The position of the touched point is determined according to the detected intersection point of the touched row electrode line and touched column electrode line.

The touch flat panel display 700 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

The touch signal sampling unit is a single passive device such as a resistor, capacitor, or inductor, a combination of multiple passive devices, a single active device, or a circuit unit having active devices.

### Eighth Embodiment

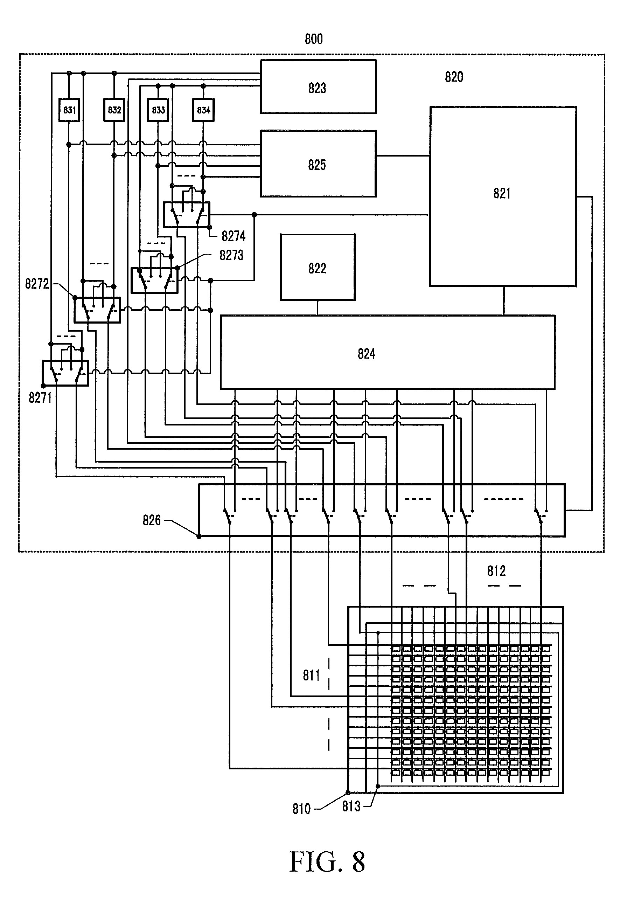

As shown in FIG. 8, a touch flat panel display 800 includes a TFT active display screen 810 and a driving circuit 820. The driving circuit 820 includes a control circuit 821, a display driving source 822 for providing display driving energy, a touch excitation source 823 for providing touch excitation energy, a display gating and output circuit 824, a touch system circuit 825, and a display/touch signal gating-switch and output circuit formed by an analog switch group 826 and analog switch groups 8271, 8272, 8273, and 8274. The display screen 810 is provided with row electrodes 811, column electrodes 812 of a TFT array and common electrodes 813. An input end of the display gating and output circuit 824 is connected with the display driving source 822; output ends of the display gating and output circuit 824 are respectively connected with one input end of the analog switches of the analog switch group 826; the other input ends of the analog switches of the analog switch group 826 are divided into four groups, which are respectively connected with the output ends of the switches of the analog switch groups 8271, 8272, 8273, and 8274; one input end of the switches of the analog switch groups 8271, 8272, 8273, and 8274 are respectively connected with the touch excitation source 823 through touch sampling elements 831, 832, 833, and 834 of the touch system circuit 825, and the other input ends of the switches of the analog switch groups 8271, 8272, 8273, and 8274 are directly connected with the touch excitation source 823 together. A detection point is disposed on the ends of the touch sampling elements 831, 832, 833, and 834 connected with the analog switch groups 8271, 8272, 8273, and 8274, and is connected with the touch system circuit 825. The touch system circuit 825 detects a change of an electrical potential on the detection point; a reference endpoint for measuring the electrical potential is disposed on the other ends of the touch sampling elements 831, 832, 833, and 834 (that is, the output end of the touch excitation 823), a common ground end of the driving circuit 820, or a specific reference point of the driving circuit 820. The control circuit 821 controls the analog switch group 826 and the analog switch groups 8271, 8272, 8273, and 8274 to enable the electrode lines of the display screen to communicate with the output ends of the display gating and output circuit 824, and the display gating and output circuit 824 sends display driving signals to the connected electrode lines of the row electrodes 811 and column electrodes 812, and the common electrodes 813 of the display screen; alternatively, the control circuit 821 controls the analog switch group 826 and the analog switch groups 8271, 8272, 8273, and 8274 to enable the electrode lines of the display screen to communicate with the touch excitation source 823, and the touch excitation source 823 applies touch excitation signals to the connected electrode lines of the row electrodes 811 and column electrodes 812 and the common electrodes 813 of the display screen. Connection lines in FIG. 8 not only represent single line connection, but also represent multiple line connection.

The touch flat panel display works in the following mode.

During the display driving period, the analog switch group 826 in the driving circuit 820 enables the electrode lines of the display screen to communicate with the output ends of the display gating and output circuit 824, the control circuit 821 controls the display gating and output circuit 824 to send display driving signals to the connected row electrodes 811, column electrodes 812, and common electrodes 813 of the display screen, and the display screen 810 is in a display driving state.

During the touch detection period, the control circuit 821 controls the analog switch group 826 to enable the electrodes of the display screen to be divided into four groups and to be respectively connected with the analog switch groups 8271, 8272, 8273, and 8274, the analog switch groups 8271, 8272, 8273, and 8274 all allow a part of (one or more) electrode lines of the display screen in each group to respectively communicate with the touch excitation source 823 through the touch sampling elements 831, 832, 833, and 834; the other electrode lines of the display screen directly communicate with the touch excitation source 823; the touch system circuit 825 judges whether the display screen 810 is touched, which areas are touched, and positions of which row and column electrode lines are touched by simultaneously implementing touch detection to multiple areas of the display screen 810 by respectively detecting changes of touch signals on each detection point, and the display screen 810 is in a touch detection state. The position of the touched point is determined according to the detected intersection point of the touched row electrode line and touched column electrode line.

The touch flat panel display 800 repeatedly switches between the display driving period and the touch detection period, and the display driving and the touch detection time division multiplex the electrodes of the display screen, thus forming a touch flat panel display which supports both display and touch control.

Touch detection is implemented simultaneously to multiple areas of the display screen, so as to save time needed for implementing touch detection to the full screen of the display screen, shorten the touch detection period, and extend the display driving period, thus helping to avoid the touch detection from affecting the effect of displaying.

### Ninth Embodiment

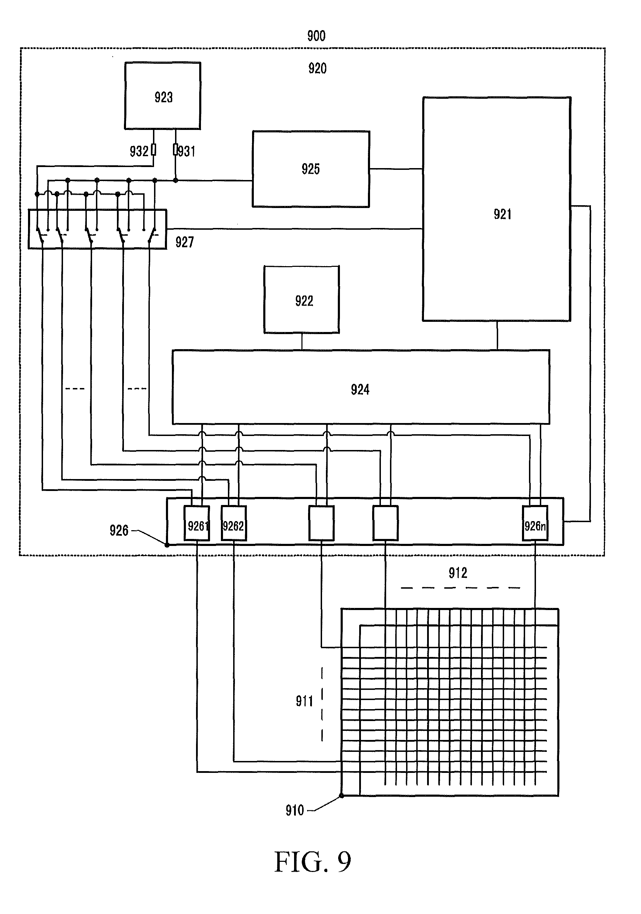

As shown in FIG. 9, a touch flat panel display 900 includes a passive display screen 910 and a driving circuit 920. The driving circuit 920 includes a control circuit 921, a display driving source 922 for providing display driving energy, a touch excitation source 923 for providing touch excitation energy, a display gating and output circuit 924, a touch system circuit 925, a display/touch signal loading and merge circuit group 926, and an analog switch group 927. The display screen 910 is provided with row electrodes 911 and column electrodes 912 of the display screen. The display driving source 922 utilizes direct current (DC) power supply, and the touch excitation source 923 utilizes alternating current (AC) power supply with higher frequency (for example, over 50 kHz). An input end of the display gating and output circuit 924 is connected with the display driving source 922; output ends of the display gating and output circuit 924 are respectively connected with one input end of signal loading and merge circuit units 9261, 9262, ..., 926n of the display/touch signal loading and merge circuit group 926, and the other input end of the signal loading and merge circuit units 9261, 9262, ..., 926n of the display/touch signal loading and merge circuit group 926 is respectively connected with the output ends of the analog switches of the analog switch group 927; the output end of the signal loading and merge circuit units 9261, ..., 926N of the display/touch signal loading and merge circuit group 926 are respectively connected with the electrode lines of the row electrodes 911 and column electrodes 912 of the display screen; one input end of the switches of the analog switch group 927 is connected with the touch excitation source 923 through the touch sampling element 931 of the touch system circuit 925, and the other input end thereof is connected with the touch excitation source 923 through a balancing resistor. A detection point is disposed on the end of the touch sampling element 931 connected with the analog switch group 927, and is connected with the touch system circuit 925. The touch system circuit 925 detects a change of an electrical potential on the detection point; a reference endpoint for measuring the electrical potential is disposed on the other end of the touch sampling element 931 (that is, the output end of the touch excitation source 923), an end of the balancing resistor 923 connected with the analog switch group 927, a common ground end of the driving circuit 920, or a specific reference point of the driving circuit 920. The display/touch signal loading and merge circuit group 926 and the analog switch group 927 enable the display driving source 922 and the AC touch excitation source 923 to mix signals and apply mixed signals to the electrode lines of the row electrodes 911 and column electrodes 912 of the display screen. Connection lines in FIG. 9 not only represent single line connection, but also represent multiple line connection.

The touch flat panel display can work in a manner of simultaneously implementing display driving and touch detection.

The control circuit 921 only selects one switch from the switches of the analog switch group 927 each time to communicate with the high-frequency touch excitation source 923 through the touch signal sampling resistor 931, and the other switches also communicate with the high-frequency touch excitation source 923 through the balancing resistor 932. The signal loading and merge circuit units of the display/touch signal loading and merge circuit group 926 simultaneously apply the mixed signals of the low-frequency display driving signals and high-frequency touch signals from the display driving source 922 and the touch excitation source 923 to the connected electrode lines of the row electrodes 911 and column electrodes 912 of the display screen. The control circuit 921 controls the switches of the analog switch group 927 to communicate with the touch excitation source 923 one after another through the touch signal sampling resistor 931, and controls the other switches of the analog switch group 927 to communicate with the touch excitation source 923 through the balancing resistor 932; the electrode lines of the row electrodes 911 and column electrodes 912 of the display screen simultaneously send touch signals, while the touch system circuit 925 detects the change of the high frequency touch signal only on one electrode line of the row electrodes 911 and column electrodes 912 of the display screen each time. The touch system circuit 925 judges whether the display screen 910 is touched and positions of which electrode lines are touched by detecting one after another changes of high frequency touch signals on the touch sampling element 931. The position of the touched point is determined according to the detected intersection point of the touched row electrode line and touched column electrode line. The display driving and touch detection frequency division multiplex the display screen electrodes, thus forming a touch flat panel display which supports both display and touch control.

The touch flat panel display also can work in a time division mode for implementing display driving and touch detection.

During the display driving period, the switches of the analog switch group 927 in the driving circuit 920 are opened with the touch excitation source 923 and communicate with the display driving source 922, signal loading and merge circuit units of the display/touch signal loading and merge circuit group 926 only apply low-frequency display driving signals from the display driving source 922 to the connected electrode lines of the row electrodes 911 and column electrodes 912 of the display screen, and the display screen 910 is in a display driving state.

During the touch detection period, the control circuit 921 only selects one switch from the switches of the analog switch group 927 each time to communicate with the high-frequency touch excitation source 923 through the touch signal sampling resistor 931, and the other switches also communicate with the high-frequency touch excitation source 923 through the balancing resistor 932. The signal loading and merge circuit units of the display/touch signal loading and merge circuit group 926 simultaneously apply the mixed signals of the low-frequency display driving signals and high-frequency touch signals from the display driving source 922 and the touch excitation source 923 to the connected electrode lines of the row electrodes 911 and column electrodes 912 of the display screen. The control circuit 921 then controls the display gating and output circuit 924 to be in a display driving state of sending black or white display driving signals, and the signal loading and merge circuit units of the signal loading and merge circuit group 926 simultaneously send low-frequency black of white display driving signals and high-frequency touch signals to the electrode lines of the row electrodes 911 and column electrodes 912 of the display screen. The control circuit 921 controls the switches of the analog switch group 927 to communicate with the touch excitation source 923 one after another through the touch signal sampling resistor 931, and controls the other switches of the analog switch group 927 to communicate with the touch excitation source 923 through the balancing resistor 932; the electrode lines of the row electrodes 911 and column electrodes 912 of the display screen simultaneously send touch signals, while the touch system circuit 925 only detects the change of the high-frequency touch signal on the electrode line of the row electrodes 911 and column electrodes 912 of the display screen communicating with the touch signal sampling resistor 931 each time. The touch system circuit 925 judges whether the display screen 910 is touched and positions of which electrode lines are touched by detecting one after another changes of high-frequency touch signals on the touch sampling element 931, and the display screen 910 is in a touch detection state. The position of the touched point is determined according to the detected intersection point of the touched row electrode line and touched column electrode line.

The touch flat panel display 900 repeatedly switches between the display driving period and the touch detection period, and the display driving and the touch detection time division multiplex the electrodes of the display screen, thus forming a touch flat panel display which supports both display and touch control.

### Tenth Embodiment

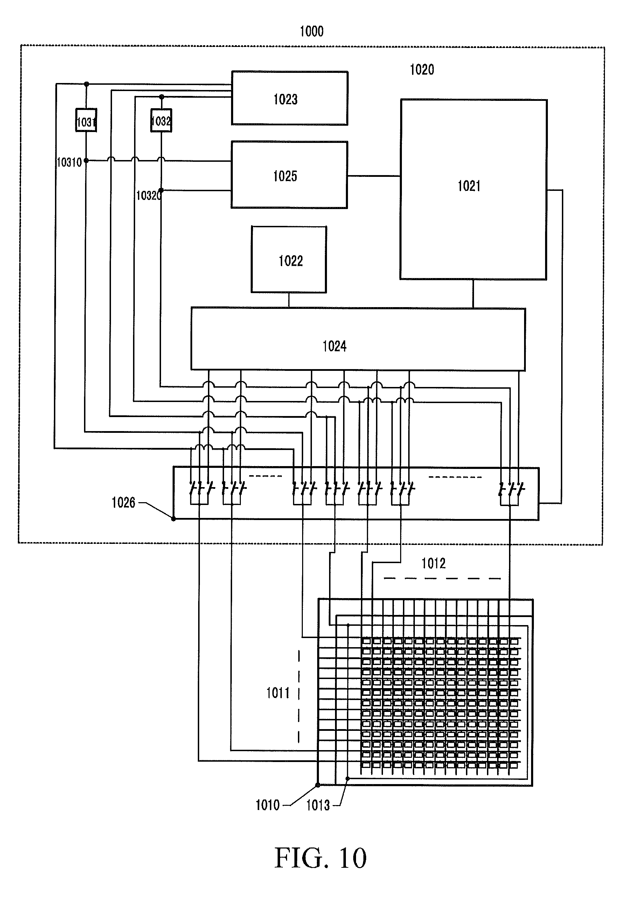

As shown in FIG. 10, a touch flat panel display 1000 includes a TFT active display screen 1010 and a driving circuit 1020. The driving circuit 1020 includes a control circuit 1021, a display driving source 1022 for providing display driving energy, a touch excitation source 1023 for providing touch excitation energy, a display gating and output circuit 1024, a touch system circuit 1025, and a display/touch signal gating-switch and output circuit. The display/touch signal gating-switch and output circuit is formed by an analog switch group 1026, and the analog switch group 1026 is a multi-pole single-throw analog switch group formed by single-pole single-throw analog switches. The display screen 1010 is provided with row electrodes 1011, column electrodes 1012, and common electrodes 1013 of the display screen. An input end of the display gating and output circuit 1024 is connected with the display driving source 1022; output ends of the display gating and output circuit 1024 are respectively connected with one input end of the analog switches of the analog switch group 1026; second input ends of the analog switches of the analog switch group 1026 are divided into two groups to be respectively connected with the touch excitation source 1023 through the sampling resistors 1031 and 1032, and third input ends of the analog switches of the analog switch group 1026 are directly connected with the touch excitation source 1023; the output ends of the analog switches of the analog switch group 1026 are respectively connected with the electrode lines of the row electrodes 1011 and column electrodes 1012 and the common electrodes 1013 of the display screen; touch signal detection points 10310 and 10320 are disposed on the connection points of the touch signal sampling resistors 1031 and 1032 connected with the input ends of the analog switch group 1026, and the touch system circuit 1025 detects changes of touch signals on the detection points. A reference endpoint for measuring an electrical potential is disposed on the other ends of the touch signal sampling resistors 1031 and 1032 (that is, the output end of the touch excitation source 1023), a common ground end of the driving circuit 1020, or a specific reference point of the driving circuit 1020. The control circuit 1021 controls the analog switch group 1026 to enable the electrode lines of the display screen to communicate with the output ends of the display gating and output circuit 1024, and the display gating and output circuit 1024 sends display driving signals to the connected electrode lines of the row electrodes 1011 and column electrodes 1012 and the common electrodes 1013 of the display screen; alternatively, the control circuit 1021 controls the analog switch group 1026 to enable the electrode lines of the display screen to communicate with the touch excitation source 1023, and the touch excitation source 1023 applies touch excitation signals to the connected electrode lines of the row electrodes 1011 and column electrodes 1012 and the common electrodes of the display screen. Connection lines in FIG. 10 not only represent single line connection, but also represent multiple line connection.

The touch flat panel display works in the following mode.

During the display driving period, the analog switch group 1026 in the driving circuit 1020 enables the electrode lines of the display screen to communicate with the output ends of the display gating and output circuit 1024, the control circuit 1021 controls the display gating and output circuit 1024 to send display driving signals to the connected row electrodes 1011, column electrodes 1012, and common electrodes 1013 of the display screen, and the display screen 1010 is in a display driving state.

During the touch detection period, the control circuit 1021 controls the analog switch group 1026 to enable only one display screen electrode line each time or multiple electrode lines of a display screen each time to communicate with the touch excitation source 1023 through the touch signal sampling resistors 1031 and 1032; the other electrode lines of the display screen directly communicate with the touch excitation source 1023; the touch system circuit 1025 judges whether the display screen 1010 is touched, which areas are touched, and positions of which row and column electrodes are touched by respectively detecting changes of touch signals on each detection point to simultaneously implement touch detection to multiple areas of the display screen 1010, and the display screen 1010 is in a touch detection state. The position of the touched point is determined according to the detected intersection point of the touched row electrode line and touched column electrode line.

The touch flat panel display 1000 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

### Eleventh Embodiment

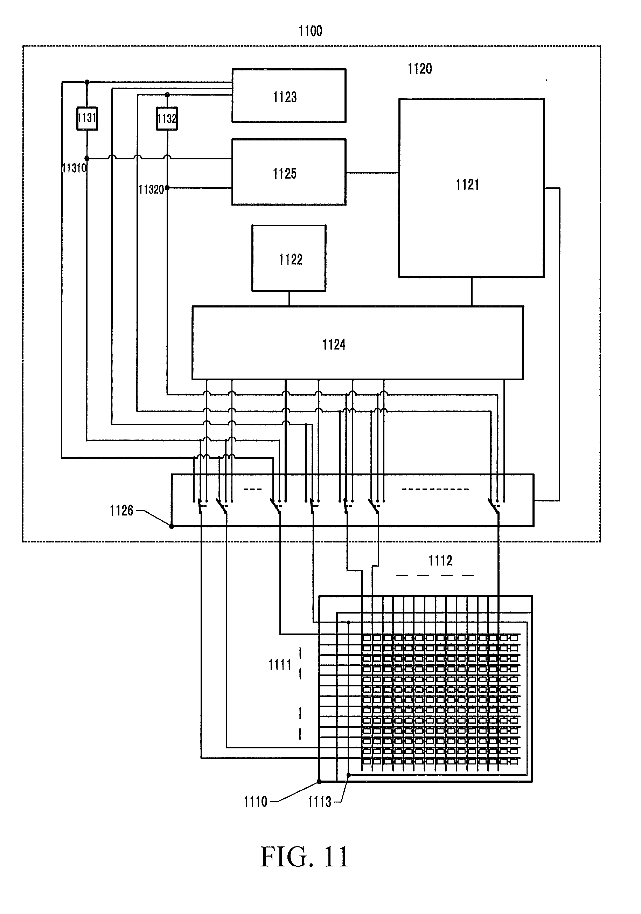

As shown in FIG. 11, the difference between the tenth embodiment and the eleventh embodiment lies in that, in the eleventh embodiment, an analog switch group 1126 forming the display/touch signal gating-switch and output circuit is formed by a plurality of single-pole multi-throw analog switches, while the connection and working principle are the same as those of the tenth embodiment.

### Twelfth Embodiment

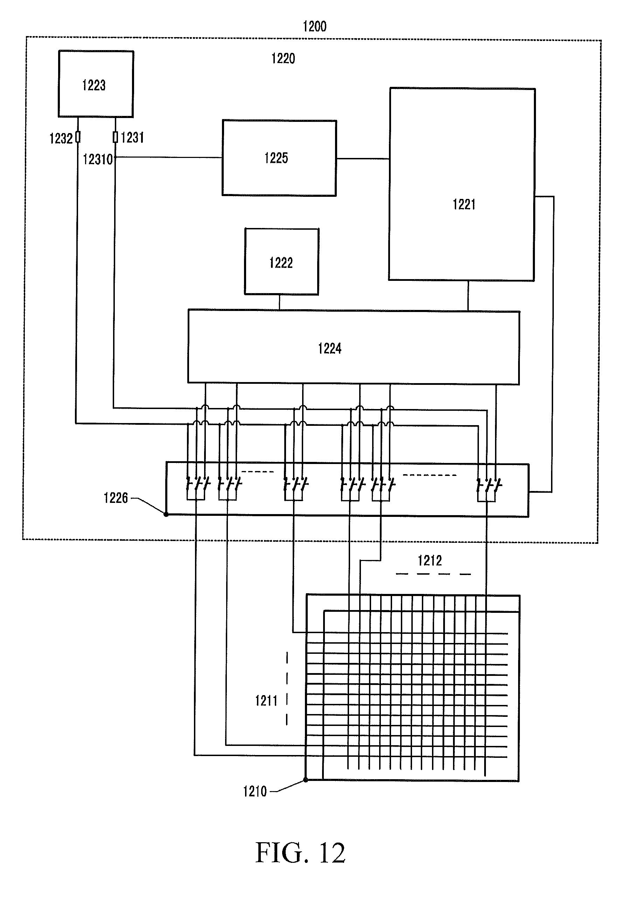

As shown in FIG. 12, a touch flat panel display 1200 includes a display screen 1210 and a driving circuit 1220. The driving circuit 1220 includes a control circuit 1221, a display driving source 1222 for providing display driving energy, a touch excitation source 1223 for providing touch excitation energy, a display gating and output circuit 1224, a touch system circuit 1225, and a display/touch signal gating-switch and output circuit. The display/touch signal gating-switch and output circuit is formed by an analog switch group 1226, and the analog switch group 1226 is a multi-pole multi-throw analog switch group formed by single-pole single-throw analog switches. The display screen 1210 is provided with row electrodes 1211 and column electrodes 1212 of the display screen. An input end of the display gating and output circuit 1224 is connected with the display driving source 1222; output ends of the display gating and output circuit 1224 are respectively connected with one input end of the analog switches of the analog switch group 1226; second input ends of the analog switches of the analog switch group 1226 are respectively connected with the touch excitation source 1223 together through the touch sampling element 1231 of the touch system circuit 1225; third input ends of the analog switches of the analog switch group 1226 are respectively connected with the touch excitation source 1223 through the balancing element 1232; and output ends of the analog switches of the analog switch group 1226 are respectively connected with the electrode lines of the row electrodes and column electrodes 1212 of the display screen. A touch signal detection point 12310 corresponding to the electrode lines of the display screen is disposed on a connection point between the analog switch group 1226 and the touch sampling element 1231, which is connected with the touch system circuit 1225, and the touch system circuit 1225 detects changes of electrical potentials on the detection point; and a reference endpoint for measuring the potential is disposed on the output end of the touch excitation source 1223, a common ground end of the driving circuit 1220, or a specific reference point of the driving circuit 1220. The control circuit 1221 controls the analog switch group 1226 to enable the electrode lines of the display screen to communicate with the output ends of the display gating and output circuit 1224, and the display gating and output circuit 1224 sends display driving signals to the connected electrode lines of the row electrodes 1211 and column electrodes 1212 of the display screen; alternatively, the control circuit 1221 controls the analog switch group 1226 to enable the electrode lines of the display screen to communicate with the touch excitation source 1223, and the touch excitation source 1223 applies touch excitation signals to the connected electrode lines of the row electrodes 1211 and column electrodes 1212 of the display screen. Connection lines in FIG. 12 not only represent single line connection, but also represent multiple line connection.

The touch flat panel display works in the following mode.

During the display driving period, the analog switch group 1226 in the driving circuit 1220 enables the electrode lines of the display screen to communicate with the output ends of the display gating and output circuit 1224, the control circuit 1221 controls the display gating and output circuit 1224 to send display driving signals to the connected row electrodes 1211 and column electrodes 1212 of the display screen, and the display screen 1210 is in a display driving state.

During the touch detection period, the control circuit 1221 controls the analog switch group 1226 to enable only one display screen electrode line each time to communicate with the touch excitation source 1223 through the touch sampling element 1231; the other electrode lines of the display screen communicate with the touch excitation source 1223 through the balancing element 1232; and the touch system circuit 1225 judges whether the display screen 1210 is touched and positions of which row and column electrode lines are touched by detecting one after another changes of touch signals on the touch signal detection point, and the display screen 1210 is in a touch detection state. The position of the touched point is determined according to the detected intersection point of the touched row electrode line and touched column electrode line.

The touch flat panel display 1200 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal having a change exceeding a set threshold flows may be regarded as a touched electrode line, thus enabling the touch flat panel display to support multi-point touch.

The touch sampling element and the balancing element is a single passive device such as a resistor, capacitor, or inductor, or a combination of multiple passive devices, or a single active device, or a circuit unit having active devices.

The above descriptions are merely preferred embodiments of the present invention, and are not intended to limit the scope of the invention. It is apparent to those of ordinary skill in the art that, modifications and variations can be made without departing from the spirit of the present invention, which should be covered in the protection scope of the present invention.

## Claims

1. A touch flat panel display, comprising a display screen and a driving circuit; wherein the driving circuit further comprises a display driving circuit and a touch system circuit; the display driving circuit is provided with a display driving source for providing display driving energy, and a display gating and output circuit; output ends of the display gating and output circuit in the display driving circuit are respectively connected with input ends of units of a display/touch signal gating-switch and output circuit or a display/touch signal loading and merge circuit; and output ends of the units of the display/touch signal gating-switch and output circuit or the display/touch signal loading and merge circuit are respectively connected with electrode lines of a display screen, wherein
the units of the display/touch signal gating-switch and output circuit or the display/touch signal loading and merge circuit communicate with a touch excitation source through one or more circuit paths; the display/touch signal gating-switch and output circuit or the display/touch signal loading and merge circuit enables more than two electrode lines of a display screen to simultaneously communicate with the touch excitation source for providing touch excitation energy; and the touch system circuit time division detects changes of touch signals on a circuit path connecting the touch excitation source with the electrode lines of the display screen, to judge whether a position of each electrode line of a display screen is touched.

2. The touch flat panel display according to claim 1, wherein
the units of the display/touch signal gating-switch and output circuit or the display/touch signal loading and merge circuit enabling the electrode lines of the display screen to communicate with the touch excitation source are connected with the touch excitation source through one circuit path; and the touch system circuit judges whether the electrode lines of the display screen are touched by detecting changes of the touch signals on the path connecting the units of the display/touch signal gating-switch and output circuit or the display/touch signal loading and merge circuit with the touch excitation source.

3. The touch flat panel display according to claim 1, wherein
the units of the display/touch signal gating-switch and output circuit or the display/touch signal loading and merge circuit enabling the electrode lines of the display screen to communicate with the touch excitation source are connected with the touch excitation source through no less than two circuit paths; and the touch system circuit judges whether the electrode lines of the display screen are touched by detecting changes of the touch signals on at least one path of the paths connecting the units of the display/touch signal gating-switch and output circuit or the display/touch signal loading and merge circuit with the touch excitation source.

4. The touch flat panel display according to claim 3, wherein
the no less than two paths connecting the units of the display/touch signal gating-switch and output circuit or the display/touch signal loading and merge circuit with the touch excitation source implement gating through a multiplexer.

5. The touch flat panel display according to claim 1, wherein
a detection point for detecting the touch signals by the touch system circuit is disposed on a path connecting the touch excitation source with the units of the display/touch signal gating-switch and output circuit or the display/touch signal loading and merge circuit, or disposed on a path connecting the units of the display/touch signal gating-switch and output circuit or the display/touch signal loading and merge circuit with the electrode lines of the display screen.

6. The touch flat panel display according to claim 5, wherein
the detection point for detecting touch signals is connected with the touch system circuit through a multiplexer.

7. The touch flat panel display according to claim 1, wherein
a touch signal detection unit of the touch system circuit is a passive device, an active device, or a circuit unit formed by multiple elements.

8. The touch flat panel display according to claim 1, wherein
the touch system circuit detects the touch signals on at least one path of the multiple paths connecting the touch excitation source by detecting at least one of a current signal and a voltage signal.

9. The touch flat panel display according to claim 1, wherein
the touch system circuit detects the touch signals on at least one path of the multiple paths connecting the touch excitation source by detecting at least one of amplitude, time, phase, frequency signal, and pulse number.

10. The touch flat panel display according to claim 1, wherein
the touch excitation source connected with the electrode lines of the display screen is the same output end of the same touch excitation source, different output ends of the same touch excitation source, or different touch excitation sources.

11. The touch flat panel display according to claim 1, wherein
the touch excitation source is alternating current (AC) power supply or hybrid alternating current/direct current (AC/DC) power supply, and an output waveform is a square ware, a sine wave, a superposed wave of a square wave or a sine wave with DC, or other waveforms.

12. The touch flat panel display according to claim 1, wherein
a frequency of the touch signal output by the driving circuit to the electrode lines of the display screen through the display/touch signal gating-switch and output circuit or the display/touch signal loading and merge circuit is no less than 50 kHz.
